# FASCICULE DE BREVET EUROPEEN

(11) **EP 2 488 739 B1**
(45) Date de publication et mention de la délivrance du brevet: **12.09.2018**
(21) Numéro de dépôt: 10771400.8
(22) Date de dépôt: 14.10.2010
(51) Int. Cl.: B64D 33/02, F02C 7/05, F02C 7/052, F02C 7/20, F02K 3/062, F02K 3/072, B64D 27/00

(54) **ENTRÉE D'AIR DE MOTEUR À TURBINE À GAZ DANS UNE NACELLE**
LUFTEINLASS EINES GASTURBINENMOTORS IN EINER GONDEL
AIR INTAKE FOR A AS TURBINE ENGINE WITHIN A NACELLE

(30) Priorité: 16.10.2009 FR 0957275; 16.10.2009 FR 0957277
(43) Date de publication de la demande: 22.08.2012
(73) Titulaire: Safran Aircraft Engines, 75015 Paris (FR)
(72) Inventeur: CHANEZ, Philippe, Gérard, F-75015 Paris (FR); MABBOUX, Gaétan, Jean, F-92100 Boulogne-Billancourt (FR); MINOT, Philippe, Gilles, F-75011 Paris (FR); VINCENT, Thomas, Alain, Christian, F-91120 Palaiseau (FR); YVON, Didier, Jean-Louis, F-91600 Savigny Sur Orge (FR)
(74) Mandataire: Gevers & Orès
(86) Numéro de dépôt international: PCT/EP2010/065416
(87) Numéro de publication internationale: WO 2011/045373

(56) Documents cités:
- EP-A1- 0 394 102
- EP-A2- 1 898 068
- FR-A1- 2 536 789
- FR-A1- 2 538 452
- GB-A- 697 006
- GB-A- 2 202 588
- GB-A- 2 203 801

## Description

La présente invention concerne le domaine des turbomoteurs aéronautiques, et vise en particulier l'entrée d'air du turbomoteur, ce dernier comprenant le moteur lui-même et la nacelle dans laquelle il est logé.

Un turbomoteur comprend généralement un générateur de gaz formé d'un ou plusieurs ensembles de rotors tournant autour d'un même axe. Chaque ensemble, désigné corps, est constitué d'un compresseur et d'une turbine reliés le plus souvent par un arbre ou un tambour, disposés l'un à l'amont l'autre à l'aval d'une chambre de combustion par rapport à l'écoulement des flux gazeux dans le moteur. A ce générateur de gaz est associée une soufflante ou une hélice simple ou multiple qu'il entraîne.

Lorsque le rotor de la soufflante ou de l'hélice est disposé à l'avant du moteur, l'entrée d'air du générateur est située en aval de celui-ci. Les corps étrangers, tels que les oiseaux, la grêle, l'eau et les pierres, susceptibles d'être absorbés par le générateur sont au moins en partie freinés ou arrêtés par le rotor avant qui par son inertie et ses dimensions forme partiellement écran ou sont déviés par effet centrifuge de la soufflante vers la veine secondaire. Cette protection n'existe pas sur les moteurs dont le rotor de soufflante ou d'hélice n'est pas placé en amont de l'entrée d'air du générateur de gaz.

Ainsi c'est le cas d'un moteur à hélices non carénées, que l'on désigne aussi par son terme anglo-saxon de « unducted fan », UDF, ou « open rotor ». Ce type de moteur comprend un doublet d'hélices, contrarotatives, disposées radialement à l'extérieur de la nacelle enveloppant le générateur, au droit de deux roues de turbine par lesquelles elles sont entraînées directement. Le générateur de gaz est monoflux. Ce type de moteur est présenté dans la demande de brevet au nom de la demanderesse : FR2 606 081.

GB 2203801 décrit un moyen pour dévier les corps étrangers dans un canal de déviation comprenant des tuyères d'éjection d'un fluide visant à accélérer le flux dévié.

EP1898068 décrit un conduit de déviation de corps étrangers vers l'extérieur d'une nacelle via une ouverture.

FR 2536789 décrit un séparateur de particules avec un moyen de piégeage constitué par des aubes dont le profil évite que les corps étrangers rebondissent.

FR 2538452 décrit un séparateur de particules avec un moyen de centrifugation.

Une solution consisterait à renforcer les premiers étages de compresseur, mais ce renforcement conduirait à un dimensionnement des éléments peu favorable en termes de masse et d'encombrement car ceux-ci devraient être capables de supporter les impacts directement.

L'invention a pour objectif la réalisation d'une entrée d'air qui permettrait de réduire l'énergie de l'impact des objets volumineux de telle manière que lorsque ceux-ci parviennent dans le compresseur ils ont perdu suffisamment d'énergie pour ne pas causer de dommage aux organes de celui-ci.

L'invention a également pour objectif la réalisation d'une entrée d'air qui permettrait de dévier les objets de dimensions plus faibles tels que les particules de sable, la glace les pierres et l'eau et de les évacuer tout en perdant le moins possible d'énergie.

Des entrées d'air aménagées pour des moteurs équipant les hélicoptères ou bien les aéronefs à décollage ou atterrissage vertical (VTOL) sont connues. Elles comprennent par exemple des moyens déviant le flux d'air à l'entrée avec, en aval de la déviation, des moyens piégeant les objets ingérés, notamment le sable.

La présente invention vise une entrée d'air perfectionnée par rapport aux entrées d'air de l'art antérieur assurant la protection du moteur contre l'ingestion des objets étrangers tout en conservant les performances aérodynamiques de la nacelle.

Il est proposé, conformément à l'invention, un ensemble d'un moteur à turbine à gaz et d'une nacelle dans laquelle moteur à turbine à gaz est logé avec un carénage d'entrée d'air formant une entrée d'air comprenant :
- un organe de déviation d'objets étrangers délimitant avec une paroi intérieure du carénage d'entrée d'air un conduit d'admission d'air,
- un canal secondaire de déviation disposé en aval de l'organe de déviation, le canal secondaire ayant une entrée d'air et une sortie débouchant par une ouverture dans la paroi extérieure de la nacelle,
- un canal principal d'alimentation en air du moteur disposé en aval de l'organe de déviation et conduisant à une entrée d'un compresseur du moteur à turbine à gaz,
- une arête amont d'une surface de séparation de flux séparant l'entrée d'air entre le canal secondaire et le canal principal, une partie de l'arête définissant l'entrée d'air du canal secondaire,
le dit canal d'entrée d'air étant agencé pour dévier au moins une partie des objets étrangers ayant été aspirés par l'entrée d'air vers le canal secondaire de déviation, caractérisé par le fait que le canal secondaire de déviation présente une section transversale par rapport au sens de l'écoulement de l'air ayant une aire décroissante entre l'entrée d'air formée en partie par l'arête et la sortie du canal secondaire formée par l'ouverture de manière à ce que la vitesse d'écoulement de l'air parcourant le canal secondaire soit augmentée de l'amont vers l'aval, l'épaisseur radiale entre deux parois formant des portions de cylindre du canal secondaire de déviation étant constante ou sensiblement constante de l'entrée d'air jusqu'à la sortie.

Par l'invention, on peut ainsi maintenir les performances aérodynamiques et limiter la traînée globale de la nacelle. C'est ainsi que la section du canal secondaire transversale par rapport au sens d'écoulement de l'air, est d'aire décroissante entre l'entrée et la sortie du canal secondaire.

Selon une caractéristique, l'organe de déviation d'objets étrangers est disposé à l'intérieur du carénage d'entrée d'air.

Selon un mode de réalisation avantageux la réduction des sections transversales est azimutale. Plus particulièrement, le canal secondaire de déviation est formé d'au moins deux conduits distincts avec une entrée annulaire commune et des sorties avec des ouvertures réparties sur le pourtour de la nacelle.

L'ouverture d'évacuation de l'air dans la paroi de la nacelle est de préférence conformée de manière à ce que le flux d'air soit orienté dans l'axe du moteur.

L'organe de déviation des objets étrangers masque de préférence le canal principal pour toute trajectoire balistique passant par l'entrée d'air. Selon un mode de réalisation avantageux il est en forme de bulbe de révolution, ménageant un canal d'admission d'air annulaire avec le carénage d'entrée d'air de forme également annulaire.

Conformément à un mode de réalisation, le canal secondaire de déviation est formé d'au moins deux conduits distincts avec une entrée annulaire commune et des sorties avec des ouvertures réparties sur le pourtour de la nacelle. Par exemple, le canal secondaire peut comprendre quatre conduits ou cinq ou plus.

Conformément à un autre mode de réalisation, dans un ensemble formé d'un moteur à turbine à gaz et d'une nacelle dans laquelle il est logé, la nacelle comprenant un carénage d'entrée d'air et un élément de capot amovible dans le prolongement dudit carénage d'entrée d'air, ledit ensemble est caractérisé par le fait que le canal secondaire de déviation comprend au moins une portion de canal secondaire, formant écope de déviation, solidaire dudit élément de capot amovible.

On résout le problème d'installer un ou des conduits de déviation des objets en conservant des performances aérodynamiques satisfaisantes dans un environnement moteur contraint en encombrement. La solution permet de conserver un montage isostatique transmettant le moins d'effort possible par ladite portion de canal secondaire formant écope de déviation.

En outre la solution permet un gain de masse moteur par rapport à une réalisation où le moteur doit être capable de supporter les impacts directement.

Cette solution convient bien à un ensemble dont l'élément de capot est articulé autour d'un axe parallèle à l'axe du moteur de manière à découvrir le moteur.

Cette solution facilite la maintenance : capots ouverts, la ou les portions de conduits ne gênent pas la maintenance du moteur à turbine à gaz. Les pièces de l'entrée d'air, susceptibles d'être impactées, peuvent être inspectées. Elles sont démontables et facilement interchangeables en cas d'impact.

Selon un mode de réalisation préféré, l'ensemble d'un moteur à turbine à gaz et d'une nacelle présente un organe de déviation qui est en forme de bulbe de révolution, ménageant un canal d'admission d'air annulaire avec le carénage d'entrée d'air de forme également annulaire, l'organe de déviation étant supporté au moins en partie par un premier carter à moyeux interne en étant engagé dans ledit moyeu interne.

Plus particulièrement ledit premier carter à moyeux est fixé au moteur et notamment le premier carter à moyeux est fixé au moteur par l'intermédiaire d'un second carter à moyeux.

Avec ce mode de réalisation, on optimise la durée de vie et la fiabilité de l'ensemble, les chemins d'efforts et le montage étant simples.

Avantageusement, le second carter à moyeux forme un plan de suspension du moteur à un aéronef.

L'ensemble du moteur et de la nacelle comprend par ailleurs les caractéristiques suivantes prises seules ou en combinaison :
L'élément de capot étant articulé autour d'un axe parallèle à l'axe du moteur de manière à découvrir le moteur, la portion de canal secondaire de déviation solidaire de l'élément de capot articulé présente des surfaces amont venant en appui étanche contre des surfaces d'appui formant le canal secondaire à l'intérieur du carénage d'entrée d'air. Notamment, lesdites surfaces d'appui sont ménagées sur le carter à moyeux.

Selon une autre caractéristique, le moteur à turbine à gaz comprend des hélices non carénées, les hélices étant disposées en aval de l'entrée d'air du moteur à turbine à gaz.

Le canal secondaire est conformé de manière à ce que la vitesse d'écoulement de l'air le parcourant soit augmentée de l'amont vers l'aval, le canal secondaire ayant une sortie débouchant dans la paroi extérieure de la nacelle. Cet accroissement de vitesse est obtenu par réduction de la section du canal secondaire transversale par rapport au sens d'écoulement de l'air entre l'entrée et la sortie du canal secondaire. Cette réduction des sections transversales est de préférence azimutale de manière à obtenir des orifices de sorties répartis à la surface de la nacelle.

L'organe de déviation d'objets étrangers masque de préférence le canal principal pour toute trajectoire balistique passant par l'entrée d'air. On évite ainsi l'ingestion directe dans le moteur de tout objet étranger.

L'invention vise plus particulièrement les moteurs de type à hélices non carénées ; les hélices étant disposées en aval de l'entrée du moteur.

L'invention sera mieux comprise, et d'autres buts, détails, caractéristiques et avantages de celle-ci apparaîtront plus clairement au cours de la description explicative détaillée qui va suivre, d'un ou plusieurs modes de réalisation de l'invention donnés à titre d'exemples purement illustratifs et non limitatifs, en référence aux dessins schématiques annexés. Sur ces dessins :
La figure 1 représente schématiquement en coupe axiale partielle un turbomoteur de type à hélices non carénées dont l'entrée d'air est conforme à l'invention,
La figure 2 est une vue en perspective de l'entrée d'air de la figure 1 et montre les éléments de l'entrée d'air en transparence selon un premier mode de réalisation,
La figure 3 est une vue éclatée en perspective de l'ensemble moteur et de sa nacelle selon un autre mode de réalisation où les écopes sont intégrés à une nacelle comprenant deux capots articulés autour d'axes longitudinaux,
La figure 4 est une vue en coupe du mode de réalisation de la figure 3 montrant l'interface entre le second carter à moyeux et les éléments de capot, le capot étant ouvert,
La figure 5 est une vue en coupe du mode de réalisation de la figure 3 montrant l'interface entre le second carter à moyeux et les éléments de capot, le capot étant fermé,
La figure 6 est une coupe de la figure 4 passant par l'axe de la machine,
La figure 7 est une coupe de la figure 4 ne passant pas par l'axe de la machine.
La figure 8 représente schématiquement en coupe axiale partielle un turbomoteur de type à hélices non carénées avec une variante de réalisation de l'invention concernant le second carter à moyeux.

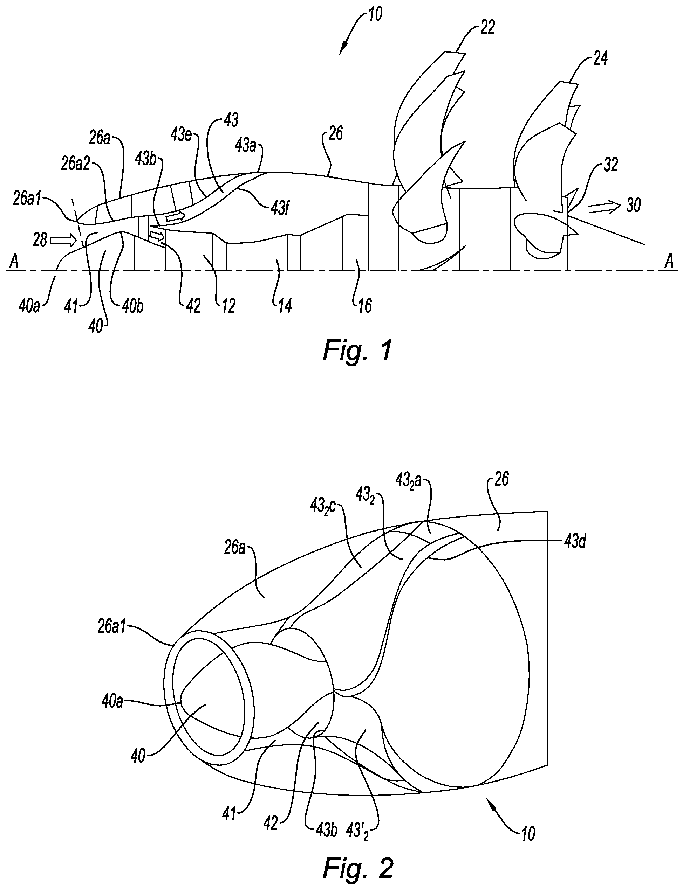

On se réfère d'abord à la figure 1 qui représente les éléments constitutifs principaux d'un turbomoteur 10 à hélices non carénées. Il comporte d'amont en aval, dans le sens d'écoulement des gaz à l'intérieur du turbomoteur, un compresseur 12, une chambre annulaire de combustion 14, une turbine à haute-pression 16 dont on ne voit que les carters. En aval de la turbine haute pression 16 sont disposées deux turbines à basse-pression non visibles qui sont contrarotatives, c'est-à-dire qu'elles tournent dans deux sens opposés autour de l'axe longitudinal A du moteur.

Chacune de ces turbines aval est solidaire en rotation d'une hélice externe 22, 24 s'étendant radialement à l'extérieur de la nacelle 26 de la turbomachine, cette nacelle 26 étant sensiblement cylindrique et s'étendant le long de l'axe A depuis l'entrée d'air autour du compresseur 12, de la chambre de combustion 14, et des turbines.

Le flux d'air 28 qui pénètre dans le moteur est comprimé puis est mélangé à du carburant et brûlé dans la chambre de combustion 14, les gaz de combustion passant ensuite dans les turbines pour entraîner en rotation les hélices 22, 24 qui fournissent la majeure partie de la poussée générée par la turbomachine. Les gaz de combustion sortant des turbines sont expulsés à travers une tuyère 32 (flèches 30) pour augmenter la poussée.

Les hélices 22, 24 sont disposées coaxialement l'une derrière l'autre et comportent une pluralité de pales régulièrement réparties autour de l'axe A de la turbomachine. Ces pales s'étendent sensiblement radialement et sont du type à calage variable, c'est-à-dire qu'elles peuvent tourner autour de leurs axes de façon à optimiser leur position angulaire en fonction des conditions de fonctionnement de la turbomachine.

La nacelle 26 comprend un carénage d'entrée d'air 26a en amont, de forme annulaire. Un organe 40 de déviation des objets étrangers est disposé à l'intérieur du carénage d'entrée d'air 26a. Il délimite avec la paroi intérieure 26a2 du carénage d'entrée d'air 26a, un canal d'entrée d'air 41 pour le moteur. Ce canal 41 est ici annulaire. L'organe de déviation des objets est de forme globalement ovoïde dont l'axe est colinéaire à celui AA du moteur. Un sommet 40a de l'ovoïde pointe en amont de l'arête amont 26a1 du carénage 26a. L'organe de déviation présente un diamètre maximal sur sa partie élargie en 40b en aval de l'arête 26a1. L'organe de déviation est avantageusement supporté par un carter à moyeu non représenté dont les bras rayonnent entre un moyeu intérieur dans lequel sont montés l'organe de déviation et une virole extérieure.

En aval de la partie élargie 40b, le canal d'entrée d'air 41 s'élargit et se subdivise en deux canaux concentriques : un canal principal 42 intérieur et un canal secondaire 43 extérieur au précédent. Le canal principal 42 conduit à l'entrée du compresseur 12 et alimente le moteur en air primaire. Le canal secondaire 43 chemine à l'intérieur de la nacelle 26 extérieurement aux différents carters du moteur. Il débouche dans la paroi de la nacelle 26 à travers une ouverture 43a de celle-ci. Le canal est délimité par deux parois radiales ou sensiblement radiales, 43₂c et 43₂d, qui s'étendent longitudinalement entre l'arête 43b et l'ouverture 43a, et par deux parois en forme de portions de cylindres, une paroi 43f radialement intérieure, une paroi 43e radialement extérieure. Cette dernière est dans le prolongement de la paroi intérieure 26a2 du carénage d'entrée d'air 26a.

Selon le mode de réalisation représenté, le moteur comprend deux canaux 43₂ et 43₂' secondaires s'étendant depuis l'arête amont 4 3b de la surface de séparation de flux d'entrée d'air en les deux canaux, principal 42 et secondaire 43. Conformément à une caractéristique de l'invention, les canaux secondaires 43₂ et 43₂' ont une section transversale par rapport à la direction de l'écoulement qui diminue progressivement depuis l'arête 43b de séparation des flux. Cette diminution de section entraîne une augmentation de la vitesse de l'air dans le canal secondaire 43. De cette manière, d'une part on évite toute ingestion d'air par les ouvertures 43a de sortie du canal secondaire 43 et d'autre part le flux d'air participe à la propulsion.

De préférence, la diminution de section transversale par rapport à la direction de l'écoulement de l'amont vers l'aval est obtenue par réduction azimutale de section, l'écart entre les deux parois longitudinales 43₂c et 43₂d diminuant progressivement entre l'arête 43b et l'ouverture 43₂a. L'épaisseur radiale, entre les deux portions de cylindre, du canal secondaire de déviation des objets étrangers est constante ou sensiblement constante de l'entrée correspondant à l'arête 43b jusqu'à l'ouverture 43₂a. Comme on le voit sur la figure 2, l'ouverture 43a de chaque canal 43 s'étend sur une largeur circonférentielle très inférieure à celle de l'entrée définie par une partie de l'arête 43b et qui s'étend sur une demi-circonférence de celle-ci.

La fonction des différents éléments constituant cette entrée d'air est la suivante. Un objet étranger est aspiré en vol par l'entrée d'air ; il vient percuter l'organe de déviation 40 sur lequel il ricoche. Sa trajectoire est déviée vers la paroi intérieure du carénage d'entrée. En aval de la partie élargie de l'organe de déviation, l'objet est dirigé vers l'un des canaux de déviation 43₂ ou 43₂' d'où il est entraîné vers l'extérieur à travers l'ouverture 43a.

L'organe de déviation est avantageusement supporté par un premier carter à moyeux 51 dont les bras rayonnent entre un moyeu intérieur dans lequel sont montés l'organe de déviation et une virole extérieure. Le premier carter à moyeux 51 est lui-même supporté par un deuxième carter à moyeux 52 disposé en aval. Ce deuxième carter 52 est fixé au moteur, par exemple au carter du compresseur 12.

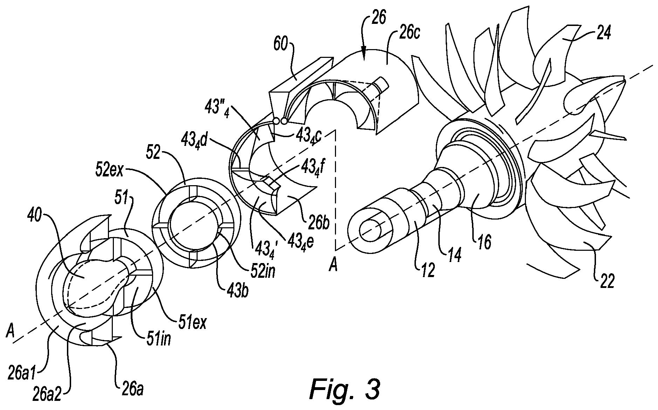

La figure 3 représente une vue éclatée et en perspective de l'ensemble de la figure 1 conformément à une variante de réalisation à quatre écopes. La nacelle 26 comprend, en aval du carénage d'entrée d'air 26a, un capot formé de deux éléments de capot 26b et 26c articulés sur le pylône 60 par lequel l'ensemble est fixé à l'aéronef. Les éléments sont articulées chacun autour d'un axe parallèle à l'axe AA du moteur. Selon le mode de réalisation représenté, chaque élément de capot 26b ou 26c supporte deux écopes, l'une haute 43₄' l'autre basse 43₄". Les quatre écopes sont des portions de canal secondaire 43. Elles sont ici de profil identique en raison de leur disposition symétrique autour de l'axe moteur.

Une écope 43₄' ou 43₄" de canal secondaire 43 est délimitée par deux parois radiales ou sensiblement radiales, 43₄c et 43₄d, qui s'étendent longitudinalement entre l'arête 43b et l'ouverture 43₄a, et par deux parois en forme de portions de cylindres, une paroi 43₄f radialement intérieure, une paroi 43₄e radialement extérieure. Cette dernière est dans le prolongement de la paroi intérieure 26a2 du carénage d'entrée d'air 26a lorsque le capot est fermé. Les écopes s'étendent depuis l'arête amont 43b de la surface de séparation de flux d'entrée d'air en les deux canaux, principal 42 et secondaire 43.

Conformément à une caractéristique de l'invention, les écopes du canal secondaire 43 ont une section transversale par rapport à la direction de l'écoulement qui diminue progressivement depuis l'arête 43b de séparation des flux. Cette diminution de section entraîne une augmentation de la vitesse de l'air dans le canal secondaire 43. De cette manière, d'une part on évite toute ingestion d'air par les ouvertures 43₄a de sortie du canal secondaire 43 et d'autre part le flux d'air participe à la propulsion.

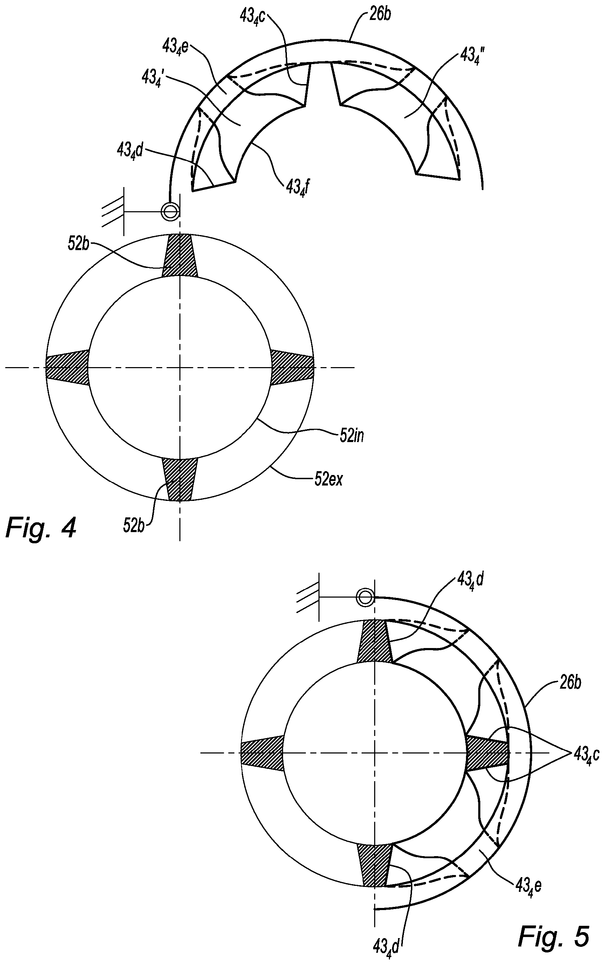

De préférence, la diminution de section transversale par rapport à la direction de l'écoulement de l'amont vers l'aval est obtenue par réduction azimutale de section, l'écart entre les deux parois longitudinales 43₄c et 43₄d diminuant progressivement entre l'arête 43b et l'ouverture 43₄a. L'épaisseur radiale, entre les deux portions de cylindre, des écopes est constante ou sensiblement constante de l'entrée correspondant à l'arête 43b jusqu'à l'ouverture 43a. Comme on le voit sur la figure 2, l'ouverture 43₄a de chaque écope 43₄' ou 43₄" s'étend sur une largeur circonférentielle très inférieure à celle de l'entrée définie par une partie de l'arête 43b et qui s'étend sur un quart de circonférence de celle-ci. Les figures 4 et 5 montrent un élément de capot 26b en position fermée, figure 4 et en position ouverte, figure 45 permettant l'inspection du moteur.

Conformément à une autre caractéristique de l'invention, l'organe de déviation 40 est supporté par le moteur par le moyen de deux carters à moyeu 51 et 52. Le premier carter à moyeux 51 est formé d'un moyeu intérieur 51in et d'une virole ou moyeu extérieur 51ex, reliés par des bras radiaux 51b. L'espace entre les deux moyeux 51in et 51ex définit l'ouverture du canal d'entrée d'air 41. Le moyeu intérieur 51in retient le bulbe de l'organe de déviation 40. Le deuxième carter à moyeux 52 comprend de la même façon un moyeu intérieur 52in et un moyeu extérieur 52ex reliés par des bras radiaux 52b. Le deuxième carter à moyeux 52 définit une partie du canal secondaire 43.

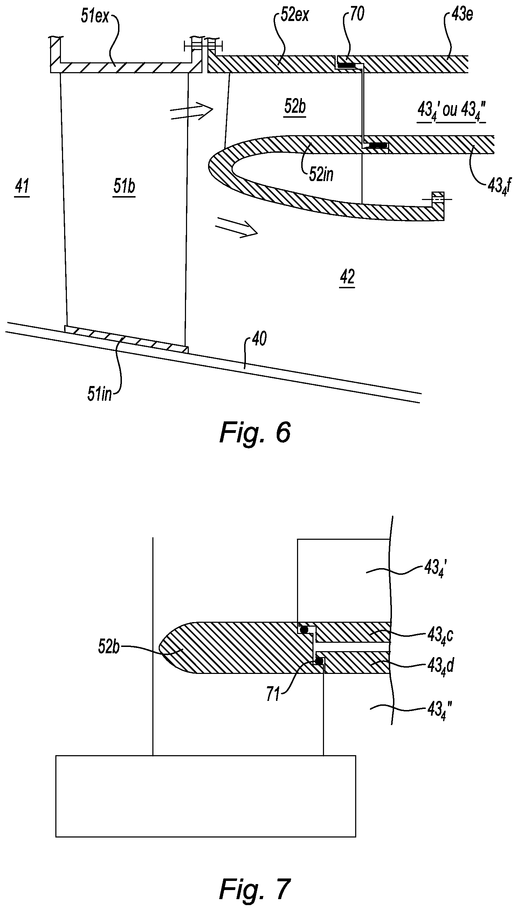

La figure 6 qui est une vue en coupe longitudinale partielle de la figure 5 montre l'agencement de deux carters à moyeux. Les deux carters 51 et 52 sont rendus solidaires l'un de l'autre par boulonnage l'une à l'autre de leur virole extérieure 51ex et 52ex respective. Le moyeu intérieur 52in du deuxième carter à moyeux est quant à lui rendu solidaire du carter du moteur, par exemple du carter du compresseur 12 non visible sur la figure 6. De cette manière, on assure le maintien de l'organe de déviation 40 au moteur à turbine à gaz aval. On évite par ce montage les risques de mise en vibration de celui-ci.

Comme on le voit sur les figures 4 et 5, l'élément de capot 26b ou 26c est articulé autour d'un axe parallèle à l'axe AA. Les écopes sont disposées dans le prolongement aval du deuxième carter 52 et conformées de manière à permettre un assemblage étanche entre le deuxième carter à moyeux 52 et les écopes 43₄' ou 43₄". En relation avec les figures 6 et 7 qui sont respectivement les vues en coupes longitudinale passant par l'axe et ne passant pas par l'axe du canal secondaire, l'étanchéité entre le carter 52 et les écopes 43₄' et 43₄" est assurée de la façon suivante.

Des joints 70 sont intercalés entre les prolongements aval des deux viroles de moyeu 52ex et 52in et les prolongements amont des deux parois cylindriques 43₄e et 43₄f des écopes 43₄' et 43₄". Il s'agit par exemple de joints à lèvres.

Comme on le voit sur la figure 6 des joints sont interposés entre les parois latérales 43₄c et 43₄d des écopes et les flancs des bras 52b radiaux du carter à moyeux 52. Il est observé que de préférence les parois latérales 43₄c et 43₄d des écopes sont inclinées par rapport à la normale aux parois cylindriques pour assurer un centrage des écopes par rapport aux bras radiaux 52b.

La fonction des différents éléments constituant cette entrée d'air est la suivante. Un objet étranger est aspiré en vol par l'entrée d'air ; il vient percuter l'organe de déviation 40 sur lequel il ricoche. Sa trajectoire est déviée vers la paroi intérieure du carénage d'entrée 26a. En aval de la partie élargie de l'organe de déviation, l'objet est dirigé vers l'une des écopes du canal de déviation 43₄' ou 43₄" d'où il est entraîné vers l'extérieur à travers l'ouverture 43₄a. Si, par ricochet, il vient à être aspiré dans le canal principal, il a perdu suffisamment d'énergie pour ne pas endommager le moteur.

Conformément à une variante de réalisation, représentée sur la figure 6, du deuxième carter à moyeux celui-ci est agencé pour former le carter dit intermédiaire dans le plan de suspension avant du moteur.

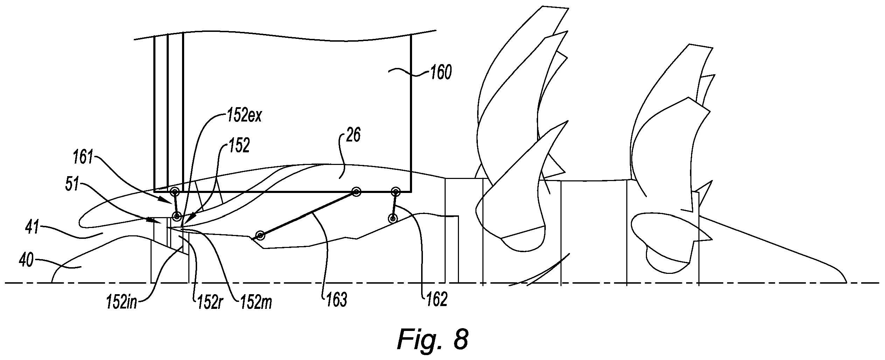

Le moteur de la figure 8 est le même que celui de la figure 1. la différence porte sur le deuxième carter à moyeux, référencé 152. Ce deuxième carter à moyeux 152 comprend un moyeu intérieur, 152in formant support du palier avant de l'arbre du moteur. Il comprend un moyeu médian 152m correspondant au moyeu intérieur du carter à moyeux de la réalisation précédente et un moyeu extérieur 152ex correspondant au moyeu extérieur de la réalisation précédente. Les moyens de fixation avant 161 du moteur à l'aéronef sont attachés à ce moyeu extérieur 152ex. On a représenté de façon schématique un exemple de suspension de moteur. Celle-ci comprend un pylône 160 qui d'un côté est fixé à l'aéronef et auquel est attaché le moteur. L'attache du moteur comprend ladite attache avant 161, une attache arrière 162 dans le plan de suspension arrière et des barres de reprise de poussée 163 Le canal d'admission d'air 42 est défini entre les deux moyeux intérieur 161in et médian 152m entre lesquels sont ménagées les aubes 152r du premier étage redresseur du compresseur.

## Revendications

1. Ensemble d'un moteur à turbine à gaz (10) et d'une nacelle (26) dans laquelle le moteur à turbine à gaz (10) est logé, la nacelle (26) comprenant un carénage d'entrée d'air (26a) formant une entrée d'air comprenant :
- un organe (40) de déviation d'objets étrangers délimitant avec une paroi intérieure (26a2) du carénage d'entrée d'air (26a) un canal (41) d'entrée d'air,
- un canal secondaire (43) de déviation disposé en aval de l'organe (40) de déviation, le canal secondaire (43) ayant une entrée d'air et une sortie débouchant par une ouverture (43a) dans la paroi extérieure de la nacelle (26),
- un canal principal (42) d'alimentation en air du moteur disposé en aval de l'organe (40) de déviation et conduisant à une entrée d'un compresseur (12) du moteur à turbine à gaz,
- une arête (43b) amont d'une surface de séparation de flux séparant l'entrée d'air entre le canal secondaire (43) et le canal principal (42), une partie de l'arête (43b) définissant l'entrée d'air du canal secondaire (43), ledit canal (41) d'entrée d'air étant agencé pour dévier au moins une partie des objets étrangers ayant été aspirés par l'entrée d'air vers le canal secondaire (43) de déviation,
le canal secondaire (43) de déviation présentant une section transversale par rapport au sens de l'écoulement de l'air ayant une aire décroissante entre l'entrée d'air formée en partie par l'arête (43b) et la sortie du canal secondaire (43) formée par l'ouverture (43a) de manière à ce que la vitesse d'écoulement de l'air parcourant le canal secondaire soit augmentée de l'amont vers l'aval, **caractérisé par le fait que** l'épaisseur radiale entre deux parois formant des portions de cylindre du canal secondaire de déviation est constante ou sensiblement constante de l'entrée d'air du canal secondaire jusqu'à la sortie.

2. Ensemble selon la revendication précédente, **caractérisé en ce que** l'organe (40) de déviation d'objets étrangers est disposé à l'intérieur du carénage d'entrée d'air (26a)

3. Ensemble selon l'une des revendications précédentes, **caractérisé en ce que** l'organe de déviation (40) d'objets étrangers masque le canal principal (42) pour toute trajectoire balistique passant par l'entrée d'air.

4. Ensemble selon l'une des revendications précédentes, **caractérisé en ce que** l'organe de déviation (40) est en forme de bulbe de révolution, ménageant un canal (41) d'entrée d'air annulaire avec le carénage (26a) d'entrée d'air de forme annulaire.

5. Ensemble selon l'une des revendications précédentes, **caractérisé en ce que** l'aire de la section du canal secondaire (43), transversale par rapport au sens d'écoulement de l'air, entre l'entrée d'air et la sortie du canal secondaire (43) est décroissante de manière azimutale.

6. Ensemble selon la revendication précédente, **caractérisé en ce que** le canal secondaire (43) est délimité au moins par une paroi (43f) radialement intérieure en forme de portion de cylindre, et une paroi (43e) radialement extérieure en forme de portion de cylindre, l'épaisseur radiale entre la paroi (43f) radialement interne et la paroi (43e) radialement externe étant constante ou sensiblement constante de l'arête (43b) jusqu'à l'ouverture (43a).

7. Ensemble selon l'une des revendications précédentes, **caractérisé en ce que** le canal secondaire (43) de déviation est formé d'au moins deux conduits distincts (43₂, 43₂') avec une entrée annulaire commune et des sorties avec des ouvertures (43₂a) réparties sur le pourtour de la nacelle (26).

8. Ensemble selon l'une des revendications précédentes, **caractérisé en ce que** l'ouverture (43a) d'évacuation de l'air dans la paroi de la nacelle est conformée de manière à ce que le flux d'air soit orienté dans l'axe du moteur.

9. Ensemble selon la revendication 1, **caractérisé en ce que** la nacelle comprend un élément de capot amovible (26b, 26c) dans le prolongement dudit carénage d'entrée d'air et en ce le canal secondaire (43) de déviation comprend au moins une portion du canal secondaire formant écope (43₄' et 43₄") de déviation et solidaire dudit élément de capot amovible (26b, 26c).

10. Ensemble selon la revendication précédente, **caractérisé en ce qu'**il comprend un élément de capot amovible (26b, 26c) articulé autour d'un axe parallèle à l'axe du moteur de manière à découvrir le moteur.

11. Ensemble selon l'une des revendications précédentes, **caractérisé en ce que** l'organe (40) de déviation d'objets est en forme de bulbe de révolution, ménageant un canal d'admission d'air annulaire avec le carénage d'entrée d'air de forme annulaire, l'organe de déviation étant supporté au moins en partie par un premier carter à moyeux (51) avec un moyeu interne (51in), en étant engagé dans ledit moyeu interne (51in).

12. Ensemble selon la revendication précédente, **caractérisé en ce que** ledit premier carter à moyeux (51) est fixé au moteur, par l'intermédiaire d'un second carter à moyeux (52 ; 152), formant un plan de suspension du moteur à un aéronef.

13. Ensemble selon la revendication précédente, caractérisé en qu'il comprend un élément de capot (26b, 26c) articulé autour d'un axe parallèle à l'axe du moteur de manière à découvrir le moteur, une portion du canal secondaire de déviation solidaire de l'élément de capot articulé présentant des surfaces amont venant en appui étanche contre des surfaces d'appui formant le canal secondaire à l'intérieur du carénage d'entrée d'air.

14. Ensemble selon la revendication précédente, **caractérisé en ce que** lesdites surfaces d'appui sont ménagées sur le second carter à moyeux (52 ; 152).

15. Ensemble selon l'une quelconque des revendications précédentes, **caractérisé en ce que** le moteur à turbine à gaz comprend des hélices non carénées, les hélices étant disposées en aval de l'entrée d'air du moteur à turbine à gaz.

## Patentansprüche

1. Baugruppe aus einem Gasturbinenmotor (10) und einer Gondel (26), in der der Gasturbinenmotor (10) untergebracht ist, wobei die Gondel (26) eine Lufteinlassverkleidung (26a) umfasst, die einen Lufteinlass bildet, umfassend:
- ein Organ (40) zum Ablenken von Fremdkörpern, das mit einer Innenwand (26a2) der Lufteinlassverkleidung (26a) einen Lufteinlasskanal (41) begrenzt,
- einen sekundären Ablenkkanal (43), der stromabwärts des Ablenkorgans (40) angeordnet ist, wobei der sekundäre Kanal (43) einen Lufteinlass und einen Auslass aufweist, der über eine Öffnung (43a) in der Außenwand der Gondel (26) mündet,
- einen Hauptkanal (42) zum Versorgen des Motors mit Luft, der stromabwärts des Ablenkorgans (40) angeordnet ist und zu einem Einlass eines Kompressors (12) des Gasturbinenmotors führt,
- eine Kante (43b) stromaufwärts einer Stromtrennfläche, die den Lufteinlass zwischen dem sekundären Kanal (43) und dem Hauptkanal (42) trennt, wobei ein Teil der Kante (43b) den Lufteinlass des sekundären Kanals (43) definiert,
wobei der Lufteinlasskanal (41) dafür eingerichtet ist, mindestens einen Teil der Fremdkörper, die vom Lufteinlass angesaugt wurden, zum sekundären Ablenkkanal (43) hin abzulenken,
wobei der sekundäre Ablenkkanal (43) in Bezug auf die Richtung der Strömung der Luft einen Querschnitt aufweist, der zwischen dem zum Teil von der Kante (43b) gebildeten Lufteinlass und dem von der Öffnung (43a) gebildeten Auslass des sekundären Kanals (43) eine abnehmende Querschnittsfläche aufweist, sodass die Strömungsgeschwindigkeit der Luft, die den sekundären Kanal durchläuft, von der stromaufwärtigen zur stromabwärtigen Seite hin erhöht wird, **gekennzeichnet durch** die Tatsache, dass die radiale Dicke zwischen zwei Wänden, welche Zylinderabschnitte des sekundären Ablenkkanals bilden, vom Lufteinlass des sekundären Kanals bis zum Auslass konstant oder im Wesentlichen konstant ist.

2. Baugruppe nach dem vorstehenden Anspruch, **dadurch gekennzeichnet, dass** das Organ (40) zum Ablenken von Fremdkörpern im Inneren der Lufteinlassverkleidung (26a) angeordnet ist.

3. Baugruppe nach einem der vorstehenden Ansprüche, **dadurch gekennzeichnet, dass** das Organ (40) zum Ablenken von Fremdkörpern den Hauptkanal (42) für jede Flugbahn, die durch den Lufteinlass verläuft, verdeckt.

4. Baugruppe nach einem der vorstehenden Ansprüche, **dadurch gekennzeichnet, dass** das Ablenkorgan (40) in Drehkolbenform vorliegt, die mit der Lufteinlassverkleidung (26a) in Ringform einen ringförmigen Lufteinlasskanal (41) ausbildet.

5. Baugruppe nach einem der vorstehenden Ansprüche, **dadurch gekennzeichnet, dass** die Querschnittsfläche des Querschnitts des sekundären Kanals (43) in Bezug auf die Strömungsrichtung der Luft quer zwischen dem Lufteinlass und dem Auslass des sekundären Kanals (43) azimutartig abnimmt.

6. Baugruppe nach dem vorstehenden Anspruch, **dadurch gekennzeichnet, dass** der sekundäre Kanal (43) von mindestens einer radial innengelegenen Wand (43f) in Zylinderabschnittform, und einer radial außengelegenen Wand (43e) in Zylinderabschnittform begrenzt wird, wobei die radiale Dicke zwischen der radial innengelegenen Wand (43f) und der radial außengelegenen Wand (43e) von der Kante (43b) bis zur Öffnung (43a) konstant oder im Wesentlichen konstant ist.

7. Baugruppe nach einem der vorstehenden Ansprüche, **dadurch gekennzeichnet, dass** der sekundäre Ablenkkanal (43) von mindestens zwei getrennten Leitungen (43₂, 43₂') mit einem gemeinsamen ringförmigen Einlass und Auslässen mit Öffnungen (43₂a) gebildet wird, die über den Umfang der Gondel (26) verteilt sind.

8. Baugruppe nach einem der vorstehenden Ansprüche, **dadurch gekennzeichnet, dass** die Öffnung (43a) zum Ausleiten der Luft in der Wand der Gondel so ausgestaltet ist, dass der Luftstrom in der Achse des Motors ausgerichtet wird.

9. Baugruppe nach Anspruch 1, **dadurch gekennzeichnet, dass** die Gondel in der Verlängerung der Lufteinlassverkleidung ein abnehmbares Abdeckelement (26b, 26c) umfasst, und dadurch, dass der sekundäre Ablenkkanal (43) mindestens einen Abschnitt des sekundären Kanals umfasst, der eine Ablenkschaufel (43₄' und 43₄") bildet und fest mit dem abnehmbaren Abdeckelement (26b, 26c) verbunden ist.

10. Baugruppe nach dem vorstehenden Anspruch, **dadurch gekennzeichnet, dass** sie ein abnehmbares Abdeckelement (26b, 26c) umfasst, das um eine zur Achse des Motors parallele Achse herum angelenkt ist, um den Motor freizulegen.

11. Baugruppe nach einem der vorstehenden Ansprüche, **dadurch gekennzeichnet, dass** das Organ (40) zum Ablenken von Körpern in Drehkolbenform vorliegt, die mit der Lufteinlassverkleidung in Ringform einen ringförmigen Luftzufuhrkanal ausbildet, wobei das Ablenkorgan mindestens zum Teil von einem ersten Nabengehäuse (51) mit einer Innennabe (51in) getragen wird, indem es in die Innennabe (51in) eingreift.

12. Baugruppe nach dem vorstehenden Anspruch, **dadurch gekennzeichnet, dass** das erste Nabengehäuse (51) mittels eines zweiten Nabengehäuses (52; 152), welches eine Aufhängungsebene des Motors zu einem Flugzeug bildet, am Motor befestigt ist.

13. Baugruppe nach dem vorstehenden Anspruch, **dadurch gekennzeichnet, dass** sie ein Abdeckelement (26b, 26c) umfasst, das um eine zur Achse des Motors parallele Achse herum angelenkt ist, um den Motor freizulegen, wobei ein Abschnitt des sekundären Ablenkkanals, der fest mit dem angelenkten Abdeckelement verbunden ist, stromaufwärtige Flächen aufweist, die in dichte Anlage gegen Anlageflächen kommen, welche den sekundären Kanal im Inneren der Lufteinlassverkleidung bilden.

14. Baugruppe nach dem vorstehenden Anspruch, **dadurch gekennzeichnet, dass** die Anlageflächen am zweiten Nabengehäuse (52; 152) ausgebildet sind.

15. Baugruppe nach einem der vorstehenden Ansprüche, **dadurch gekennzeichnet, dass** der Gasturbinenmotor unverkleidete Laufräder umfasst, wobei die Laufräder stromabwärts des Lufteinlasses des Gasturbinenmotors angeordnet sind.

## Claims

1. Unit for a gas turbine engine (10) and a nacelle (26) housing the gas turbine engine (10), whereby the nacelle (26) includes an air inlet fairing (26a) forming an air intake that includes:
- a member (40) for deflecting foreign objects forming, with an inner wall (26a2) of the air inlet fairing (26a), an air intake duct (41),
- a secondary deflection duct (43) arranged downstream from the deflecting member (40), whereby the secondary duct (43) features an air inlet and an outlet leading through an opening (43a) in the outer wall of the nacelle (26),
- a main duct (42) supplying air to the engine arranged downstream from the deflecting member (40) and leading to the inlet of a compressor (12) of the gas turbine engine,
- an upstream ridge (43b) of a flow separation surface separating the air intake between the secondary duct (43) and the main duct (42), whereby a portion of the ridge (43b) defines the air intake of the secondary duct (43),
whereby said air intake duct (41) is arranged to divert at least a part of the foreign objects suctioned by the air intake towards the secondary deflection duct (43), whereby the secondary deflection duct (43) features a cross-section transversal to the direction of the air flow having a surface that decreases from the air inlet formed by part of the ridge (43b) to the outlet of the secondary duct (43) formed by the opening (43a), so that the rate of the air flow travelling through the secondary duct is increased from upstream to downstream, **characterised in that** the radial thickness between two walls that form the cylinder section of the secondary deflection duct is constant or substantially constant from the air inlet of the secondary duct to the outlet.

2. Unit according to the previous claim, **characterised in that** the deflecting member (40) of foreign objects is arranged inside the air inlet fairing (26a).

3. Unit according to any of the previous claims, **characterised in that** the deflecting member (40) of foreign objects masks the main duct (42) for any ballistic trajectory passing through the air inlet.

4. Unit according to any of the previous claims, **characterised in that** de deflecting member (40) features a protruding rotational shape forming an annular air intake duct (41) with the annular air inlet fairing (26a).

5. Unit according to any one of the previous claims, **characterised in that** the surface of the cross-section of the secondary duct (43), transversal to the direction of the air flow, decreases azimuthally from the air intake to the outlet of the secondary duct (43).

6. Unit according to the previous claim, **characterised in that** the secondary duct (43) is at least delimited by a radially internal wall (43f) in the shape of a cylinder section, and a radially external wall (43e) in the shape of a cylinder section, whereby the radial thickness between the radially internal wall (43f) and the radially external wall (43e) is constant or substantially constant from the ridge (43b) to the opening (43a).

7. Unit according to any of the previous claims, **characterised in that** the secondary deflection duct (43) is formed by at least two separate ducts (43₂, 43₂') sharing an annular inlet and featuring outlets with openings (43₂a) distributed around the circumference of the nacelle (26).

8. Unit according to any of the previous claims, **characterised in that** the air outlet opening (43a) in the wall of the nacelle is configured so that the air flow is oriented along the axis of the engine.

9. Unit according to claim 1, **characterised in that** the nacelle features a removable cowl element (26b, 26c) in the extension of said air inlet fairing, and **in that** the secondary deflection duct (43) includes at least a section of the secondary duct that forms a deflection scoop (43₄' and 43₄") secured to said removable cowl element (26b, 26c).

10. Unit according to the previous claim, **characterised in that** it includes a removable cowl element (26b, 26c) hinged around an axis parallel to the axis of the engine and configured to reveal the engine.

11. Unit according to any of the previous claims, **characterised in that** the object deflecting member (40) features a protruding rotational shape forming a annular air intake duct with the annular air inlet fairing, whereby the deflecting member is supported at least partially by a first hub housing (51) with an internal hub (51in), by insertion in said internal hub (51in).

12. Unit according to the previous claim, **characterised in that** said first hub housing (51) is secured to the engine by means of a second hub housing (52; 152), thereby forming a plane whereby the engine is secured to an aircraft.

13. Unit according to the previous claim, **characterised in that** it features a removable cowl element (26b, 26c) hinged around an axis parallel to the axis of the engine and configured to reveal the engine, whereby a section of the secondary deflection duct secured to the hinged cowl element includes upstream surfaces that bear sealingly against the bearing surfaces forming the secondary duct inside the air inlet fairing.

14. Unit according to the previous claim, **characterised in that** said bearing surfaces are formed on the second hub housing (52; 152).

15. Housing according to any of the previous claims, **characterised in that** the gas turbine engine features non-ductedpropellers, whereby the propellers are arranged downstream from the air inlet of the gas turbine engine.
